(19) Europäisches Patentamt / European Patent Office / Office européen des brevets

(11) **EP 3 807 134 B1**

(12) **EUROPEAN PATENT SPECIFICATION**

(45) Date of publication and mention of the grant of the patent:
**26.06.2024 Bulletin 2024/26**

(21) Application number: **19730555.0**

(22) Date of filing: **06.06.2019**

(51) International Patent Classification (IPC):
**B60T 8/17** *(2006.01)*    **B60T 8/173** *(2006.01)*
**B60T 8/1761** *(2006.01)*    **B60T 8/172** *(2006.01)*

(52) Cooperative Patent Classification (CPC):
**B60T 8/1703; B60T 8/172; B60T 8/173; B60T 8/17616;** B60T 2270/86

(86) International application number:
**PCT/IB2019/054704**

(87) International publication number:
**WO 2019/239261 (19.12.2019 Gazette 2019/51)**

(54) **SYSTEM FOR THE COMBINED CONTROL OF BRAKING OF A VEHICLE, PARTICULARLY OF AN AIRCRAFT, AND OF THE WEAR OF AT LEAST ONE TYRE ASSOCIATED TO SAID VEHICLE**

SYSTEM ZUR KOMBINIERTEN STEUERUNG DER BREMSUNG EINES FAHRZEUGS, INSBESONDERE EINES FLUGZEUGS, UND DES VERSCHLEISSES VON MINDESTENS EINEM DEM FAHRZEUG ZUGEORDNETEN REIFEN

SYSTÈME COMBINÉ DE COMMANDE DE FREINAGE D'UN VÉHICULE, EN PARTICULIER D'UN AÉRONEF, ET DE CONTRÔLE DE L'USURE D'AU MOINS UN PNEUMATIQUE ASSOCIÉ AUDIT VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2018 IT 201800006348**

(43) Date of publication of application:
**21.04.2021 Bulletin 2021/16**

(73) Proprietor: **Politecnico di Milano**
**20133 Milano (IT)**

(72) Inventors:
• **SAVARESI, Sergio Matteo**
**26100 Cremona (IT)**
• **TANELLI, Mara**
**26900 Lodi (IT)**
• **D'AVICO, Luca**
**24030 Terno d'Isola (BG) (IT)**

(74) Representative: **Fermanelli, Marco**
**Gregorj S.r.l**
**Intellectual Property**
**Via L. Muratori, 13 b**
**20135 Milano (IT)**

(56) References cited:
**EP-A1- 2 974 923    EP-A2- 0 936 114**
**US-A- 4 078 845    US-A1- 2005 251 306**
**US-B1- 6 890 041**

## Description

### Technical field of the invention

The present invention refers to a system for the control of braking of a vehicle, particularly, but not in a limiting way, for the anti-skid control of an aircraft. Moreover, the system is configured to control the wear of at least one tyre associated to a wheel of said vehicle, particularly to a carriage of said aircraft.

### Prior art

By simply referring to an airplane having two rear carriages and a front carriage, when this airplane is landing, usually at first the two rear carriages touch the ground then the front carriage. During the first step, the airplane is slowed by the aerodynamic brake and possibly by the thrust reversers. In the second step, the pilot then actuates the mechanical brakes which act on the rear carriages.

The braking made by the rear brakes is commonly controlled by an anti-skid system designed for reducing the skids of the wheels.

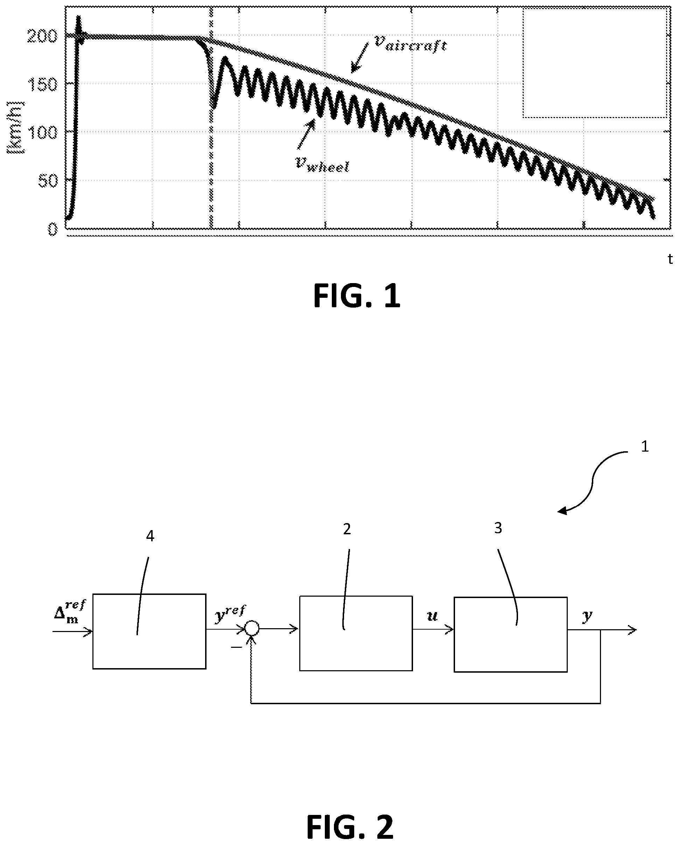

Typically, the anti-skid systems are based on an intermittent application of braking torques to the carriages. This approach for controlling the braking, in addition to the physical arrangement of the carriages themselves (which by itself generates a phenomenon known as "gear walk"), causes an oscillation of the carriage in the horizontal direction. Such situation is shown in Figure 1, which illustrates a diagram of the time t of the aircraft speed ($v_{aircraft}$) and of the carriage speed ($v_{wheel}$) during the landing step. As it is shown, after an initial interval wherein the mechanical brakes are not actuated and therefore there are no oscillations, the carriage speed oscillates about an average decreasing value.

The mechanical braking causes the tyres to wear. It was found that the presence of an anti-skid control system determines the most severe wear of aircraft carriage tyres during this step. This problem is completely different from the wear of the tyres of road vehicles, e.g. cars, which mainly wear when the vehicle advances straight or steers, etc., since these conditions are more frequent than braking.

US 4,078,845 discloses a brake control system which limits the operation of the braking forces applied to the tires and thereby minimizes both tire and brake wear. The system comprises a basic deceleration control circuit which produces an average deceleration which is compared to a pilot selected deceleration rate and an error signal is generated. This error signal is then used for modulating a braking pressure applied to the wheel.

### Summary of the invention

Therefore, an object of the present invention consists of making available a system for the anti-skid control of braking of a wheel of a vehicle, particularly of an aircraft carriage, while enabling to control the wear of the tyres.

This and other objects are met by a system for the anti-skid control of braking of a wheel of a vehicle according to claim 1.

Even though the anti-skid control system according to the invention is mainly suited to aircraft carriages, it can find an application in a variety of vehicles. For example, the system can find an application in heavy duty road vehicles, such as trucks which are particularly subjected to a tyre wear when they brake.

The dependent claims define possible advantageous embodiments of the invention.

### Brief description of the figures

The advantages of the invention are better understood and appreciated by some exemplifying non-limiting embodiments thereof described in the following with reference to the attached figures, wherein:

Figure 1 is a diagram illustrating a possible trend of the speed of an aircraft and of the speed of the aircraft carriage during a landing step in the presence of an anti-skid system according to the prior art;

Figure 2 is a block diagram of a system for the anti-skid control of braking of a wheel of a vehicle according to a possible embodiment of the invention;

Figure 3 is a block diagram of a system for the anti-skid control of braking of a wheel of a vehicle according to a further possible embodiment of the invention;

Figure 4 is a diagram illustrating possible trends of the coefficient of friction $\mu$ as a function of the skid $\lambda$ under different kinds of a roadway;

Figure 5 is a diagram illustrating a possible trend of the speed of an aircraft and of the speed of the aircraft carriage during the landing step in the presence of an anti-skid system according to the invention;

Figure 6 is a diagram illustrating a possible relationship between the wear of a tyre and the required braking distance variation (all the conditions being the same) with different reference skid values;
Figure 7 is a dynamic layout of an aircraft.

## Detailed description of the invention

With reference to the attached Figure 2, it shows a block diagram of a system for the anti-skid control of braking of a wheel of a vehicle, generally indicated by reference 1.

The system 1 comprises an actual controller 2 which receives at the input an input magnitude and outputs a control variable u. This latter corresponds to a signal for commanding the braking of a vehicle 2, particularly an aircraft, and is supplied to a braking system of the same. According to a possible embodiment, the controller 2 performs a closed-loop control of braking. Consequently, the magnitude at the input of controller 2 can be represented by the error between a reference magnitude $y^{ref}$ and the effective value of the same magnitude y detected on the aircraft 3. For this matter, this latter will be provided with suitable sensors for directly or indirectly detecting such effective magnitude y. Generally, the magnitude y will be a magnitude correlated to the braking, as it will be more specifically described in the following.

According to the invention, the system 1 comprises in addition a module 4 for determining the reference magnitude $y^{ref}$ at the input of controller 2. This latter is determined by a magnitude indicative of a reference desired wear $\Delta m^{ref}$ of the tyre of the wheel, which is supplied to the inlet of the module 4. The reference desired wear $\Delta m^{ref}$ can be determined by a user on the site, for example by the aircraft pilot via a suitable command device, and/or remotely, for example by a remote command unit. In this case, the system 1 can comprise or can be connected to a data transmission module, for example of the aircraft itself.

Possible embodiments of the controller 2 and module 4 will be now specifically described.

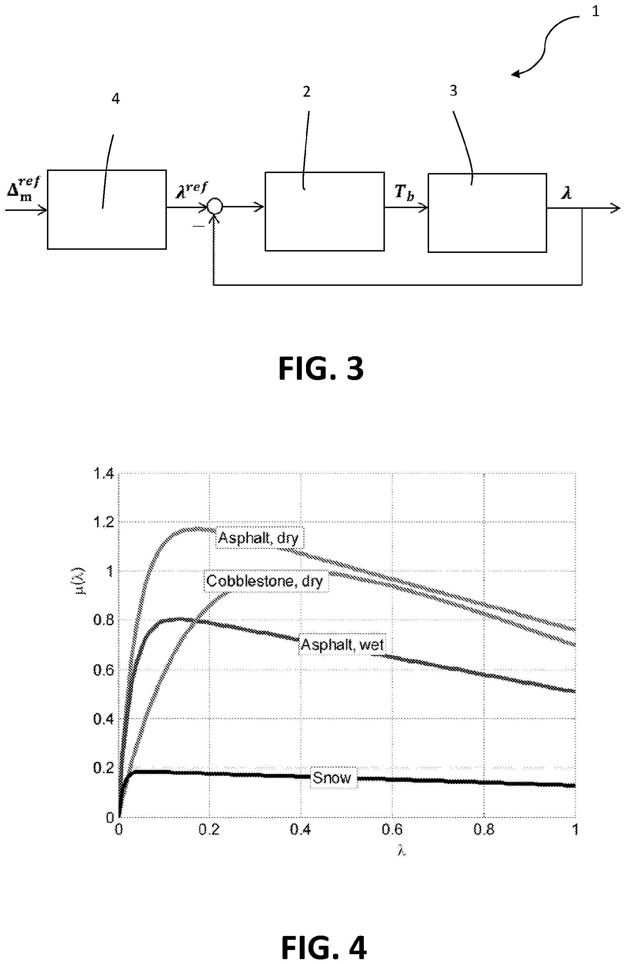

With reference to the embodiment in Figure 3, the control magnitude y can be the skid $\lambda$ of the wheel, particularly of the aircraft carriage, subjected to a braking action. Generally, the skid of a wheel can be defined by the following formula (1):

$$\lambda = \frac{v_h - \omega r}{v_h} \quad (1)$$

wherein:

- $v_h$ is the longitudinal speed of the wheel subjected to braking. Such magnitude can be measured in different ways: for example, by an inertial platform placed on the carriage whose wheel is subjected to the braking control action. Alternatively, this variable can be indirectly obtained from aircraft speed measures, obtainable for example by an angular speed sensor applied to a non-braking wheel (which in an aircraft is the front carriage, for example), or by sensors already present in the aircraft, such as a GPS sensor or by means of Pitot tubes of the same;
- $\omega$ is the angular speed of the wheel of which a skid estimate is required. For example, such magnitude can be measured by an angular speed sensor, for example an encoder, applied to the carriage of the aircraft;
- r is the radius of the considered wheel.

Based on the formula (1), if the wheel is completely locked in the braking step, the skid $\lambda$ will be equal to 1, in other words is equal to 100%.

The relationship between the longitudinal friction force $F_x$ of the wheel and the skid $\lambda$ can be described by the following formulas (2), (3):

$$F_x = F_z \mu(\lambda) \quad (2)$$

$$\mu(\lambda) = \vartheta_1\left(1 - e^{\lambda \vartheta_2}\right) - \lambda \vartheta_3 \quad (3)$$

wherein:

- $F_x$ is the longitudinal friction force;
- $F_y$ is the vertical buckling force of the wheel;
- $\lambda$ is the skid defined by formula (1);
- $\mu$ is the coefficient of friction;
- $\vartheta_1, \vartheta_2, \vartheta_3$ are coefficients predefined as a function of the tyre and roadway type, of the weather conditions, etc., experimentally defined, which correlate the coefficient of friction $\mu$ to the skid $\lambda$ based on the Burckhardt model, expressed by formula (3). Figure 4 shows possible trends of the coefficient of friction $\mu$ as a function of the skid $\lambda$ for a variety of roadways (asphalt, dry; cobblestone, dry; asphalt wet; snow).

Consequently, the controller 2 can be configured to perform a closed-loop control on the skid, by comparing a predefined reference skid $\lambda^{ref}$ with the measured effective skid $\lambda$ of the wheel. The control variable calculated by the controller is preferably the braking torque $T_b$ to be applied to the wheel on which the anti-skid control is performed, or a magnitude correlated to it. For example, such magnitude can include the pressure of a working fluid, typically oil, of the braking system, which is transformed into a braking pressure of the brake. The attached appendix 1 of the present description illustrates a possible mathematical model describing the dynamics of an aircraft whose rear carriage is subjected to an anti-skid control. Such model can be the basis for calculating the braking torque $T_b$ determined by the controller 2.

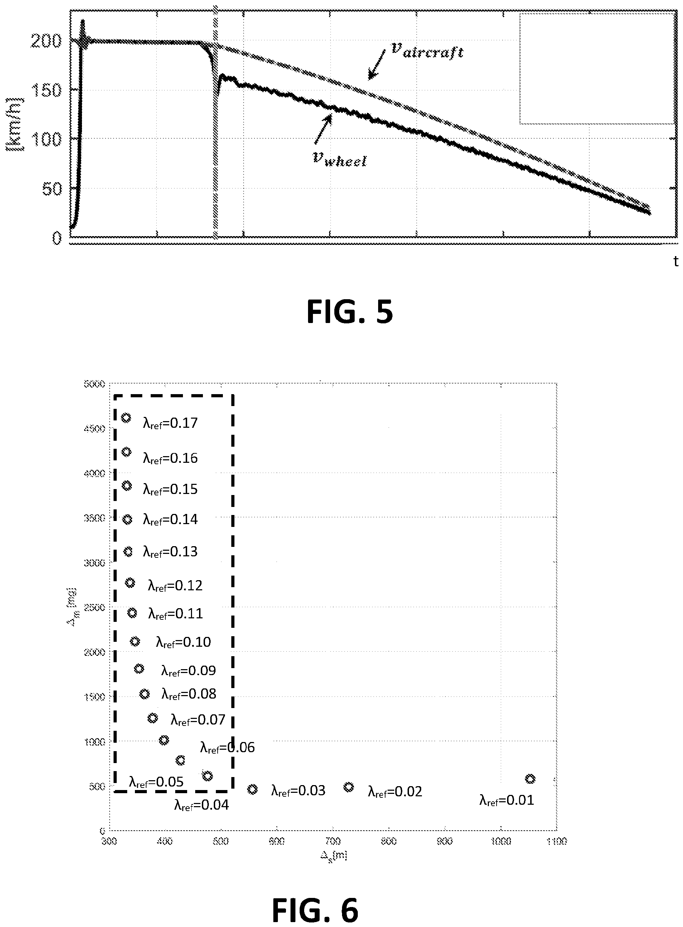

Figure 5 shows the trends of the speeds $v_{aircraft}$, $v_{wheel}$ of the aircrafts and wheel respectively, calculated by the formula $v_{wheel} = \omega \cdot r$, during the time t of the braking step following the landing, obtained by the anti-skid control of the controller 2 configured according to the above described embodiment. As it can be understood, at the beginning of the braking step, the wheel speed tends to be less than the aircraft speed (this means that there is a high skid). As the braking action continues, due to the controller operation, the two values tend to be equal to each other. The wheel speed in this case is not oscillating.

Given the relationship between the skid and the friction force and consequently the wear of the tyre of the carriage, which is skidding, acting on the reference skid $\lambda^{ref}$ at the input of the controller 2, enables to control the wear. Therefore, advantageously, the module 4 is configured to modify the reference skid value $\lambda^{ref}$ based on a reference desired wear $\Delta m^{ref}$, according to modes described in the following.

Neglecting the lateral forces acting on the carriage, the power W of the friction forces, responsible of the tyre wear, can be modelled by the following formula (4):

$$W = F_x(v_h - \omega r) + J_\omega \omega \, |\dot{\omega}| \qquad (4)$$

wherein:

- $F_x$ is the longitudinal friction force acting on the wheel;
- $v_h$ is the longitudinal speed of the wheel subjected to the braking action;
- w is the angular speed of the same wheel;
- r is the radius of the same wheel;
- $J_\omega$ is the moment of inertia of the wheel;
- $\omega$ is the angular acceleration of the same wheel, obtainable for example by deriving the angular speed $\omega$.

The mass variation, caused by the wear, of the tyre can be estimated by the following relationship (5):

$$\Delta m = f_1 * P^{f_2} \qquad (5)$$

wherein:

- $\Delta m$ is the mass variation;
- P is the power of the friction forces W, calculated by the formula (4), per contact surface unit $A_t$ between the tyre and the roadway:

$$P = W/A_t \qquad (6)$$

- $f_1$ and $f_2$ are wear coefficients correlated to the specific compound of the tyre.

From above, it follows that reducing the skid $\lambda$ decreases the power of the friction forces and therefore also the mass variation $\Delta m$ of the tyre. Of course, generally, if somebody wants to curb the wear of the tyre (and consequently the skid), the braking distance is increased.

Surprisingly, the Applicant has discovered that, even in presence of a substantial reduction of the skid, provided that this latter falls inside a determined range of values, only very small variations of the braking distance are determined, while the tyre wear shows a substantial decrease. Figure 6 shows a diagram obtained by the mathematical model shown in the appendix 1, illustrating the relationship between the wear Δm and the required braking distance variation Δs (all border conditions being equal) for different reference skid values λ$^{ref}$. As it can be understood, in a first segment, with a substantial reduction of the reference skid λ$^{ref}$, there is a substantial wear reduction Δm with a little increase of the required braking distance Δs. Consequently, it is possible to substantially curb the wear without excessively impairing the distance required for completing the braking in the landing step. Of course, it is possible to obtain a continuous curve by interpolating the single experimental points.

A static map (of a type shown in Figure 6) stored in the module 4, correlates the desired mass variation Δm$^{ref}$ to the reference skid λ$^{ref}$. Therefore, it is possible to select the desired wear by modifying the magnitude at the input of the controller 2, in this case the reference skid λ$^{ref}$, with a consequent change of the braking distance required by the aircraft.

A plurality of static maps can be stored in the module 4, for taking account of different roadways and/or different atmospheric conditions. For example, the static maps of a plurality of airports in a variety of atmospheric conditions could be stored. Based on the airport and on the actual weather conditions, one can set the desired map and the target wear of the tyre of the carriage, also for example based on the length of the runway.

As said before, it is observed that in the controller 2 the reference variable y$^{ref}$ is not required to be the skid but can be a one or more different magnitudes correlated to the braking (the angular deceleration, for example). In this case, the static map correlates such magnitude to the mass variation Δm.

Possibly, the controller 2 can be based on other control algorithms, such as for example the Pasillas-Lepine algorithm. According to this algorithm, thresholds of the wheel acceleration determining transitions in different (five) states of a finite state machine, are set, each are characterized by a specific braking action. The skid due to this effect performs cycles about an optimal value of a friction curve between wheel and road. In order to use this algorithm, it is for example required to provide the rear carriages with an angular speed sensor enabling also to calculate the angular acceleration. Oppositely, a sensor for measuring the longitudinal speed of the carriages is not required.

If the controller 2 uses this algorithm, a static map can for example be stored in the module 4 for correlating the above cited limit deceleration thresholds to the mass variation Δm. In this case, just a single sensor for measuring the angular speed of the carriage will be sufficient, while a second sensor for measuring or indirectly determining the aircraft speed will not be required.

According to a further variant, the feedback magnitude y$^{ref}$ can be the deceleration of the vehicle wheel instead of the skid λ.

According to a further variant, the feedback magnitude y$^{ref}$ can be the wear of the wheel itself, in other words the reference mass variation Δm$^{ref}$ can be directly used as a reference magnitude in the controller 2. In this case, the module 4 is actually a unitary transfer function, in other words the input corresponds to the output.

Moreover, it is observed that in the present description and in the attached claims, the elements indicated with terms such as "module" and "controller" can be implemented by hardware devices (for example control units, processors of calculators, or similar), or by software or by a combination of hardware and software.

To the described embodiments of the system for an anti-skid braking control of a wheel, particularly of a carriage of an aircraft, a person skilled in the art in order to meet contingent specific needs, could modify the invention within the scope of the attached claims.

APPENDIX 1: dynamic model of the aircraft

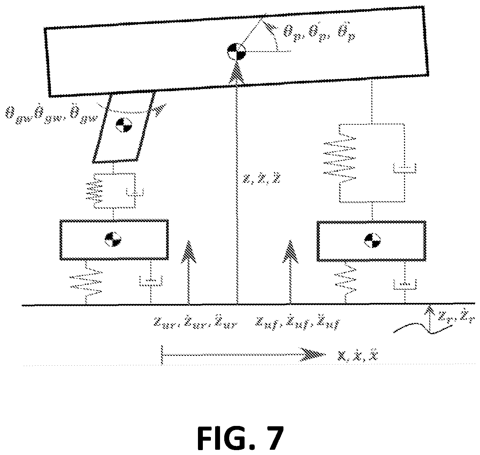

Figure 7 shows an oscillating mass diagram representing the behavior of an airplane during a landing step. According to the used model, the rear carriage, besides vertically oscillating, flexes due to its configuration.

The equations describing the systems are the following:

1) Equilibrium of the longitudinal forces (along the direction x)

$$m_{tot}\ddot{x} = -F_{drag} - F_x + J_\theta \ddot{\theta}_{gw}$$

2) Equilibrium of the vertical forces (along the direction z)

$$(m + m_g)\ddot{z} = F_{lift} + F_{rear} - F_{front} - (m + m_g)g - J_\theta \dot{\theta}_{gw}^2$$

3) Equilibrium of the moments around the pitch axis

$$J_{pitch}\ddot{\theta}_p = -L_{front}F_{front} + c_\theta(\dot{\theta}_{gw} - \dot{\theta}_p) + k_\theta(\theta_{gw} - \theta_p) + V_g L_{rear}$$

4) Equilibrium of the moments at the rear carriages

$$J_\theta \ddot{\theta}_{gw} = c_\theta(\dot{\theta}_p - \dot{\theta}_{gw}) + k_\theta(\theta_p - \theta_{gw}) - J_\theta \ddot{x} - F_x L_g$$

5) Equilibrium of the vertical forces at the front carriage

$$m_{uf}\ddot{z}_{uf} = F_{front} - m_{uf}g - k_{uf}(z_{uf} - z_r) - c_{uf}(\dot{z}_{uf} - \dot{z}_r) + k_{uf}\Delta_{t_{front}}$$

6) Equilibrium of the vertical forces at the rear carriages

$$m_{ur}\ddot{z}_{ur} = F_{rear} - m_{ur}g - k_{ur}(z_{ur} - z_r) - c_{ur}(\dot{z}_{ur} - \dot{z}_r) + k_{ur}\Delta_{t_{rear}}$$

7) Equilibrium of the moments at the rear carriages

$$J_\omega \dot{\omega} = F_x z_{ur} - T_b$$

The following Table 1 shows the meanings of each symbol used in the above given formulas.

Table 1

| Parameter | Meaning | Unit of measure |
|---|---|---|
| R | Wheel radius | m |
| J | Moment of inertia | kgm^2 |
| m | Aircraft mass | kg |
| mg | Carriage mass (only the elements subjected to gear-walk) | kg |
| $m_{ur}$, $M_{uf}$ | Wheel mass (r = rear, f = front) | kg |
| $c_r$, $c_f$ | Damping coefficient of a carriage suspension (r = rear, f = front) | Ns/m |
| $C_{ur}$, $C_{uf}$ | Damping coefficient of a wheel (r = rear, f = front) | Ns/m |
| $k_r$, $k_f$ | Rigidity coefficient of a carriage suspension (r = rear, f = front) | N/m |
| $k_{ur}$, $k_{uf}$ | Rigidity coefficient of a wheel (r = rear, f = front) | N/m |
| $L_{front}$ | Distance between the front wheel carriage and aircraft centroid | m |
| $L_{rear}$ | Distance between the rear wheel carriage and aircraft centroid | m |
| $J_{pitch}$ | Moment of inertia of the aircraft from a pitch axis | kgm^2 |
| $\boldsymbol{k_\theta}$ | Gear-walk rigidity coefficient (longitudinal torsional rigidity of a carriage | N |
| $\boldsymbol{c_\theta}$ | Gear-walk damping coefficient (longitudinal torsional damping of a carriage) | Ns |
| $L_g$ | Carriage length (portion subjected to the gear-walk phenomenon) | m |
| $J_g$ | Moment of inertia of a carriage (portion subjected to the gear-walk phenomenon) | kgm^2 |
| $\alpha$ | Aerodynamic coefficient of friction | N/(m/s)^2 |
| $\beta$ | Lift coefficient | N/(m/s)^2 |
| $\Delta\boldsymbol{s_{front}}$ | Length of the front suspension in a static condition | m |

(continued)

| Parameter | Meaning | Unit of measure |
|:---:|:---:|:---:|
| $\Delta s_{rear}$ | Length of the rear suspension in a static condition | m |
| $\Delta t_{front}$ | Nominal radius of the front wheel in a static condition | m |
| $\Delta t_{rear}$ | Nominal radius of the rear wheel in a static condition | m |
| $\dot{x}$ | Vertical longitudinal speed of the aircraft frame | m/s |
| $z$ | Vertical displacement of the aircraft frame | m |
| $\dot{z}$ | Vertical displacement speed of the aircraft frame | m/s |
| $\theta_p$ | Pitch angle of the aircraft frame | rad |
| $\dot{\theta}_p$ | Pitch speed of the aircraft frame | rad/s |
| $\theta_{gw}$ | Gear-walk angle (rear carriage) | rad |
| $\dot{\theta}_{gw}$ | Gear-walk angular speed (rear carriage) | rad/s |
| $z_{uf}$ | Displacement along the vertical axis of the point of contact between frame and front carriage | m |
| $\dot{z}_{uf}$ | Speed along the vertical axis of the point of contact between frame and front carriage | m/s |
| $z_{ur}$ | Displacement along the vertical axis of the point of contact between frame and rear carriage | m |
| $\dot{z}_{ur}$ | Speed along the vertical axis of the point of contact between the frame and rear carriage | m/s |
| $\omega$ | Speed of wheel | rad/s |
| $T_b$ | Braking torque applied to the wheel | Nm |

**Claims**

1. System (1) for an anti-skid braking control of a vehicle (3), comprising:

   - a braking system associated to at least one wheel of the vehicle (3);
   - one or more sensors for detecting at least one magnitude (y) correlated to the braking of said wheel;
   - a controller (2) configured to:

      - determine an output variable (u) based on at least one reference input magnitude (y$^{ref}$) and on said at least one magnitude (y) correlated to the braking of the wheel;
      - supply to the braking system a signal for commanding the braking, indicative of the output variable (u),

   **characterized in that** it further comprises:

      - a module (4) for determining said at least one reference magnitude (y$^{ref}$) entering the controller (2) based on a magnitude indicative of a reference desired wear ($\Delta$m$^{ref}$) of at least one tyre associated to the vehicle (3) wheel,

      wherein said module (4) for determining said at least one reference magnitude (y$^{ref}$) entering the controller (2) has stored one or more predetermined static maps correlating the magnitude indicative of the desired reference wear ($\Delta$m$^{ref}$) with a reference magnitude (y$^{ref}$) entering the controller (2),
      wherein said one or more predetermined static maps refer to different conditions of the roadway in one or more weather conditions.

2. System (1) according to claim 1, wherein said controller (2) is configured for performing a closed-loop control on said at least one magnitude (y) correlated to the braking of the wheel.

3. System (1) according to claim 1 or 2, wherein said at least one magnitude (y) correlated to the braking of the wheel is the skid ($\lambda$) of the wheel and said at least one reference magnitude ($y^{ref}$) is a reference skid ($\lambda^{ref}$).

4. System (1) according to claim 1 or 2, wherein said at least one magnitude (y) correlated to the braking of the wheel is the wear of the wheel and said at least one reference magnitude ($y^{ref}$) is a reference wear of said wheel.

5. System (1) according to claim 1 or 2, wherein said at least one magnitude (y) correlated to the braking of the wheel is the deceleration of the wheel and said at least one reference magnitude ($y^{ref}$) is a reference deceleration of said wheel.

6. System (1) according to any of the preceding claims, wherein said output variable (u) from the controller (2) is the braking torque ($T_b$) of the braking system or a magnitude correlated to it, such as the pressure in the braking system.

7. System (1) according to any of the preceding claims, wherein said one or more sensors for detecting the at least one magnitude (y) correlated to the braking of the wheel compris-es/comprise an angular speed sensor applied to said wheel and a sensor for directly or indirectly determining the longitudinal speed of said wheel.

8. System (1) according to any of the preceding claims, configured for the anti-skid braking control of a carriage of an aircraft.

9. Vehicle comprising a system (1) for the anti-skid braking control of a wheel thereof according to any of the preceding claims.

10. Vehicle according to any of the preceding claims, wherein said vehicle is an aircraft.

**Patentansprüche**

1. System (1) für eine Antiblockier-Bremssteuerung eines Fahrzeugs (3), umfassend:

   - ein Bremssystem, das mit mindestens einem Rad des Fahrzeugs (3) verbunden ist;
   - einen oder mehrere Sensoren zum Erfassen von mindestens einer Größe (y), die mit der Bremsung des Rades korreliert;
   - eine Steuereinheit (2), die konfiguriert ist zum:

      - Bestimmen einer Ausgangsvariable (u) auf der Grundlage von mindestens einer Referenzeingangsgröße ($y^{ref}$) und von mindestens einer Größe (y), die mit der Bremsung des Rades korreliert;
      - Ausgeben eines Signals an das Bremssystem zum Befehlen der Bremsung entsprechend der Ausgangsvariable (u),

   **dadurch gekennzeichnet, dass** sie ferner umfasst:

      - ein Modul (4) zum Bestimmen der mindestens einen Referenzgröße ($y^{ref}$), die in die Steuereinheit (2) eingeht, auf der Grundlage einer Größe, die einen gewünschten Referenzverschleiß ($\Delta m^{ref}$) mindestens eines mit dem Rad des Fahrzeugs (3) verbundenen Reifens angibt,

         wobei das Modul (4) zum Bestimmen der mindestens einen Referenzgröße ($y^{ref}$), die in die Steuereinheit (2) eingeht, eine oder mehrere vorgegebene statische Karten gespeichert hat, die die Größe, die den gewünschten Referenzverschleiß ($\Delta m^{ref}$) anzeigt, mit einer Referenzgröße ($y^{ref}$) korrelieren, die in die Steuereinheit (2) eingeht, wobei sich die eine oder mehreren vorgegebenen statischen Karten auf unterschiedliche Bedingungen der Fahrbahn bei einer oder mehreren Wetterbedingungen beziehen.

2. System (1) nach Anspruch 1, wobei die Steuereinheit (2) dazu konfiguriert ist, einen geschlossenen Steuerkreis der mindestens einen Größe (y) durchzuführen, die mit der Bremsung des Rades korreliert.

3. System (1) nach Anspruch 1 oder 2, wobei die mindestens eine mit dem Bremsen des Rades korrelierte Größe (y) der Schlupf ($\lambda$) des Rades ist und die mindestens eine Referenzgröße ($y^{ref}$) ein Referenzschlupf ($\lambda^{ref}$) ist.

4. System (1) nach Anspruch 1 oder 2, wobei die mindestens eine mit dem Bremsen des Rades korrelierte Größe (y) der Verschleiß des Rades ist und die mindestens eine Referenzgröße ($y^{ref}$) ein Referenzverschleiß des Rades ist.

5. System (1) nach Anspruch 1 oder 2, wobei die mindestens eine mit der Bremsung des Rades korrelierte Größe (y) die Verzögerung des Rades ist und die mindestens eine Referenzgröße ($y^{ref}$) eine Referenzverzögerung des Rades ist.

6. System (1) nach einem der vorstehenden Ansprüche, wobei die Ausgangsvariable (u) der Steuereinheit (2) das Bremsmoment ($T_b$) des Bremssystems oder eine damit korrelierte Größe, wie etwa der Druck im Bremssystem, ist.

7. System (1) nach einem der vorstehenden Ansprüche, wobei der eine oder die mehreren Sensoren zum Erfassen der mindestens einen Größe (y), die mit der Bremsung des Rades korreliert, einen an dem Rad angebrachten Winkelgeschwindigkeitssensor und einen Sensor zum direkten oder indirekten Bestimmen der Längsgeschwindigkeit des Rades umfasst/umfassen.

8. System (1) nach einem der vorstehenden Ansprüche, das für die Antiblockier-Bremssteuerung eines Flugzeugträgers konfiguriert ist.

9. Fahrzeug, umfassend ein System (1) für die Antiblockier-Bremssteuerung eines Rades davon nach einem der vorstehenden Ansprüche.

10. Fahrzeug nach einem der vorstehenden Ansprüche, wobei es sich bei dem Fahrzeug um ein Flugzeug handelt.


**Revendications**

1. Système (1) de commande de freinage antipatinage d'un véhicule (3), comprenant :

   - un système de freinage associé à au moins une roue du véhicule (3) ;
   - un ou plusieurs capteurs pour détecter au moins une magnitude (y) corrélée au freinage de ladite roue ;
   - le dispositif de commande (2) est configuré pour :

      - déterminer une variable de sortie (u) basée sur au moins une magnitude d'entrée de référence ($y^{ref}$) et sur ladite au moins une magnitude (y) corrélée au freinage de la roue ;
      - fournir au système de freinage un signal pour commander le freinage, indiquant la variable de sortie (u),

   **caractérisé en ce qu"**il comprend en outre :

      - un module (4) pour déterminer ladite au moins une magnitude de référence ($y^{ref}$) entrant dans le dispositif de commande (2) sur la base d'une magnitude indiquant une usure souhaitée de référence ($\Delta m^{ref}$) d'au moins un pneu associé à la roue du véhicule (3),

         dans lequel ledit module (4) de détermination de ladite au moins une magnitude de référence ($y^{ref}$) entrant dans le dispositif de commande (2) a stocké une ou plusieurs cartes statiques prédéterminées corrélant la magnitude indicative de l'usure de référence souhaitée ($\Delta m^{ref}$) avec une magnitude de référence ($y^{ref}$) entrant dans le dispositif de commande (2),
         dans lequel une ou plusieurs cartes statiques prédéterminées se réfèrent à différents états de la chaussée dans une ou plusieurs conditions météorologiques.

2. Système (1) selon la revendication 1, dans lequel ledit dispositif de commande (2) est configuré pour effectuer une commande en boucle fermée sur ladite au moins une magnitude (y) corrélée au freinage de la roue.

3. Système (1) selon la revendication 1 ou 2, dans lequel ladite au moins une magnitude (y) corrélée au freinage de la roue est le dérapage ($\lambda$) de la roue et ladite au moins une magnitude de référence ($y^{ref}$) est un dérapage de référence ($\lambda^{ref}$).

**4.** Système (1) selon la revendication 1 ou 2, dans lequel ladite au moins une magnitude (y) corrélée au freinage de la roue est l'usure de la roue et ladite au moins une magnitude de référence ($y^{ref}$) est une usure de référence de ladite roue.

**5.** Système (1) selon la revendication 1 ou 2, dans lequel ladite au moins une magnitude (y) corrélée au freinage de la roue est la décélération de la roue et ladite au moins une magnitude de référence ($y^{ref}$) est une décélération de référence de ladite roue.

**6.** Système (1) selon l'une quelconque des revendications précédentes, dans lequel ladite variable de sortie (u) du dispositif de commande (2) est le couple de freinage ($T_b$) du système de freinage ou une magnitude corrélée à celui-ci, telle que la pression dans le système de freinage.

**7.** Système (1) selon l'une quelconque des revendications précédentes, dans lequel ledit ou lesdits capteurs de détection de l'au moins une magnitude (y) corrélée au freinage de la roue comprennent un capteur de vitesse angulaire appliqué à ladite roue et un capteur de détermination directe ou indirecte de la vitesse longitudinale de ladite roue.

**8.** Système (1) selon l'une quelconque des revendications précédentes, configuré pour la commande de freinage antidérapant d'un chariot d'aéronef.

**9.** Véhicule comprenant un système (1) de commande de freinage antidérapant d'une de ses roues selon l'une quelconque des revendications précédentes.

**10.** Véhicule selon l'une des revendications précédentes, dans lequel ledit véhicule est un aéronef.

**FIG. 1**

**FIG. 2**

**FIG. 3**

**FIG. 4**

# FIG. 5

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4078845 A